Europäisches Patentamt

European Patent Office

Office européen des brevets

(11) Veröffentlichungsnummer: **0 197 295**
**B1**

(12)

# EUROPÄISCHE PATENTSCHRIFT

(45) Veröffentlichungstag der Patentschrift:
16.08.89

(51) Int. Cl.⁴: **F16L 55/12**

(21) Anmeldenummer: 86102779.5

(22) Anmeldetag: 03.03.86

(54) Vorrichtung zum provisorischen Absperren einer Gasleitung mittels Absperrblasen.

(30) Priorität: 11.03.85 DE 3508591

(43) Veröffentlichungstag der Anmeldung:
15.10.86 Patentblatt 86/42

(45) Bekanntmachung des Hinweises auf die Patenterteilung:
16.08.89 Patentblatt 89/33

(84) Benannte Vertragsstaaten:
AT BE CH DE FR GB IT LI LU NL SE

(56) Entgegenhaltungen:
DE-A- 2 712 952
GB-A- 1 311 017
US-A- 4 428 204

(73) Patentinhaber: **Vereinigte Elektrizitätswerke Westfalen AG, Rheinlanddamm 24, D-4600 Dortmund 1(DE)**

(72) Erfinder: **Peine, Günter, Nelkenweg 14,
D-4424 Stadtlohn(DE)**
Erfinder: **Brillert, Otger, Hessenweg 10,
D-4424 Stadtlohn(DE)**
Erfinder: **Wildenhaus, Kurt, Lortzingstrasse 9,
D-4424 Stadtlohn(DE)**

(74) Vertreter: **Patentanwälte Schulze Horn und Hoffmeister,
Goldstrasse 36, D-4400 Münster(DE)**

## Beschreibung

Die Erfindung betrifft eine Vorrichtung zum provisorischen Absperren einer Gasleitung, die über eine Montagebohrung zugänglich gemacht worden ist, unter Verwendung von aufblasbaren Absperrblasen, die durch die Vorrichtung und die Montagebohrung in Leitungslängsrichtung (Achse x - x) zusammengedrückt einschiebbar sind, mit einem auf die Montagebohrung aufsetzbaren Verschlußrohr und einem in das Verschlußrohr eingesetzten Einführkopf mit einem Umlenkstück.

Es ist bekannt, zum Anbohren von unter Druck stehenden Gasleitungen Schleusenanbohrgeräte zu verwenden, mit denen eine Montagebohrung von der Seite her in die Gasleitung einzubringen ist. Es ist weiterhin bekannt, die nach dem Einbringen einer Montagebohrung in das Gasrohr auf diesem gasdicht angebrachte Schleusen- und Verschlußanordnung in Verbindung mit einem Blasensetzgerät zu verwenden, mit dem eine schlaffe, zusammengedrückte Absperrblase in die Gasleitung einsetzbar ist. Zum eigentlichen Absperren wird dann die Blase durch ein Verbindungsrohr aufgeblasen. Bekannte Geräte (vgl. DE-A 27 12 952) sind mit Dicht- und Führungsmitteln so ausgebildet, daß elastische Absperrblasen in Gasleitungen ohne Gasaustritt gesetzt und wieder gezogen werden können. Bei noch nicht unterbrochener Gasströmung in der Gasleitung erfolgt der Einsatz der Absperrblase in Richtung stromaufwärts der Montagebohrung.

Aus Sicherheitsgründen wird jedoch gefordert, daß jeweils ein Paar derartiger Absperrblasen für eine einzige Absperrlinie gesetzt wird, so daß für jeden abzusperrenden Rohrabschnitt 2 x 2 = 4 Blasen erforderlich sind (vgl. Neue DELIWA-Z.; 1973; S. 240 ff.). Mit dem bekannten Gerät kann jeweils nur eine Blase eingesetzt werden, so daß insgesamt viermal in die Gasleitung gebohrt werden muß. Dies bedingt einen relativ hohen Arbeits- und Kostenaufwand, ganz abgesehen von einem zusätzlichen Sicherheitsrisiko.

Der Erfindung liegt die Aufgabe zugrunde, eine gegenüber dem Stand der Technik verbesserte Vorrichtung zum provisorischen Absperren einer Gasleitung anzugeben, mit der die Arbeitszeit insgesamt wesentlich verringert werden kann, ohne daß Abstriche an der Sicherheit gemacht werden müssen. Die verbesserte Vorrichtung soll mit bekannten Sicherheitsschleusen-Anbohrgeräten gasdicht zu verbinden sein und so wie bei den bekannten Geräten ermöglichen, daß während des Einsatzes jede der gesetzten Blasen unabhängig voneinander bei einer Beschädigung wieder herausgezogen werden kann.

Die Lösung der gestellten Aufgabe gelingt gemäß Erfindung mit einer Vorrichtung der eingangs genannten Art, die dadurch gekennzeichnet ist,

– daß auf das Verschlußrohr ein sich in zwei Führungsrohre verzweigendes Rohr, vorzugsweise ein Hosenrohr aufgesetzt ist,
– daß eine Trennwand mit gegenüberliegend angeordneten Führungsflächen vorgesehen ist, die vom Verzweigungsbereich des Rohres bis zum Umlenkstück reicht und die den unteren Teil des Rohres und das Verschlußrohr in zwei für eine zusammengedrückte Absperrblase durchgängige gängige Hälften teilt,
– daß das Umlenkstück zwei entgegengesetzt leitende, die Führungsflächen fortsetzende Umlenkflächen aufweist,
– wobei die Achsen der beiden Führungsrohre mit der Achse des Gasleitungsrohres eine Ebene aufspannen, zu der die Führungsflächen der Trennwand quer stehen.

Mit Vorteil ermöglicht es die erfindungsgemäße Vorrichtung, daß jeweils stromabwärts und stromaufwärts - von der Montagebohrung aus gesehen - eine Absperrblase zu setzen ist. Die Zahl der Bohrungen wird demnach im Vergleich zum Stand der Technik halbiert. Eine eventuell zerplatzte Absperrblase kann getrennt von der anderen ausgetauscht werden.

Eine vorteilhafte Ausgestaltung sieht vor, daß die Trennwand als flache, vorzugsweise biegsame Zunge ausgebildet ist, deren Breite kleiner ist als der Durchmesser des Verschlußrohres, so daß die Zunge innerhalb des Rohres hin und her bewegt werden kann, und die weiterhin mit dem Umlenkstück über eine Gelenkanordnung verbunden ist. In einer anderen Ausführungsform ist es möglich, die Trennwand als biegsamen Riemen zu gestalten, der an seinen oberen und unteren Enden gehalten ist und eine ein Ausweichen oder Ausbeulen bei Kontakt mit der zusammengedrückten Absperrblase erlaubenden Flexibilität und Überlänge hat.

Es werden durch die Anordnungen einer beweglichen Trennwand zwei nebeneinanderliegende, variable Räume geschaffen. Die bewegliche Trennwand ermöglicht es, daß jeweils der mit der zusammengefalteten Absperrblase zu beschickende Teil größer ist als der bereits mit einer Blase versehene oder noch zu beschickende Teil. Die Trennwand in ihrer Gestaltung als biegsame Zunge oder Riemen bildet demnach ein ausweichendes Führungsorgan, das je nach Bedarf von der zusammengefalteten Blase während des Einschiebevorganges aus der Mittellage herausgedrückt wird, so daß wesentlich größere Blasen damit gesetzt werden können, als es genau der Hälfte des Querschnittes des Verschlußrohres entspräche. Hierdurch eignet sich das Gerät insbesondere bei der Verwendung größerer Durchmesser, während es mit einer starren, in der Mitte angeordneten Trennwand sich nur für relativ kleine, einschiebbare Blasen eignete.

Die Ausbildung der Trennwand als Führungsorgan mit Ausweichmöglichkeit erlaubt es, daß zunächst vom Montagebohrloch aus in der einen Richtung, beispielsweise nach rechts, eine zusammengefaltete Blase eingeschoben und dann zur Gasabsperrung aufgebläht wird, wobei der Zugangsschlauch in der entsprechenden Hälfte des Verschlußrohres verbleibt. Anschließend wird in die andere Hälfte des Verschlußrohres eine zusammengefaltete Blase eingeschoben und zu der vorgenannten in Gegenrichtung plaziert. Hierbei wirkt die elastische Trennwand als Führungsfläche und Trennung, indem sie jeweils bei Einführung einer Blase in die eine Richtung in entgegengesetzter Richtung "pendelnd" eine Ausweichbewegung ausführt, wodurch genügend Platz zur Umlenkung von Blasen und Anschlußrohr entstehen, um jeweils nach rechts und zum anderen nach links eine Blase einschieben zu können. Hierdurch können bei gleicher Montagebohrung größere Nennweiten aufgenommen werden als für den Fall, daß eine einfach durch Addition vergrößerte Bohrung eingebracht würde.

Mit Vorteil wird die Wirkung der Trennwand dadurch begünstigt, daß das Endstück als Umlenkstück mit zwei entgegengesetzt liegenden Umlaufflächen gestaltet ist.

Mit dem Einsetzen von zwei Blasen zu beiden Seiten einer Montagebohrung und darübergesetztem Verschlußrohr ergibt sich der Vorteil, daß zwischen den Blasen ein toter, abgesperrter Raum geschaffen wird. Das in diesen Raum enventuell eintretende Leckgas kann über den hierfür ausgestatteten Anschlußstutzen gefahrlos abgeleitet werden. Ein weiterer Anschluß ermöglicht es gegebenenfalls, daß ein Inertgas, beispielsweise Stickstoff, Kohlendioxid oder Argon, in den Bereich eingedrückt wird.

Mit Vorteil ist eine unkomplizierte Ausgestaltung und Fertigungsmöglichkeit der Vorrichtung nach der Erfindung dadurch gegeben, daß der Verzweigungsbereich des Hosenrohres mit zwei mit geringer Krümmung gegeneinander verlaufenden Rohrzweigen ausgebildet ist, die über einen gemeinsamen Durchdringungsbereich in ein vom Führungsorgan durchsetztes Standrohr einmünden.

Weiter ist das Verschlußrohr vorteilhaft so ausgebildet, daß sein freies Ende in der Projektion einer zur Achse der Gasleitung quer stehenden Ebene sattelförmige Ausnehmungen aufweist. Die hierbei seitlich stehenbleibenden Wandflächenteile des Verschlußrohres, die bis weit in die Gasleitung hineinragen, wirken beim Einführen einer Blase als seitliche Leitfläche, die ein Ausweichen der eingeführten Blase in einer Richtung quer zu den Umlenkflächen verhindert.

Weitere zweckmäßige Ausgestaltungen der Vorrichtung sind entsprechend den Merkmalen weiterer Unteransprüche vorgesehen.

Die Erfindung wird in der Zeichnung in zwei Ausführungsformen dargestellt und erläutert.

Es zeigen:

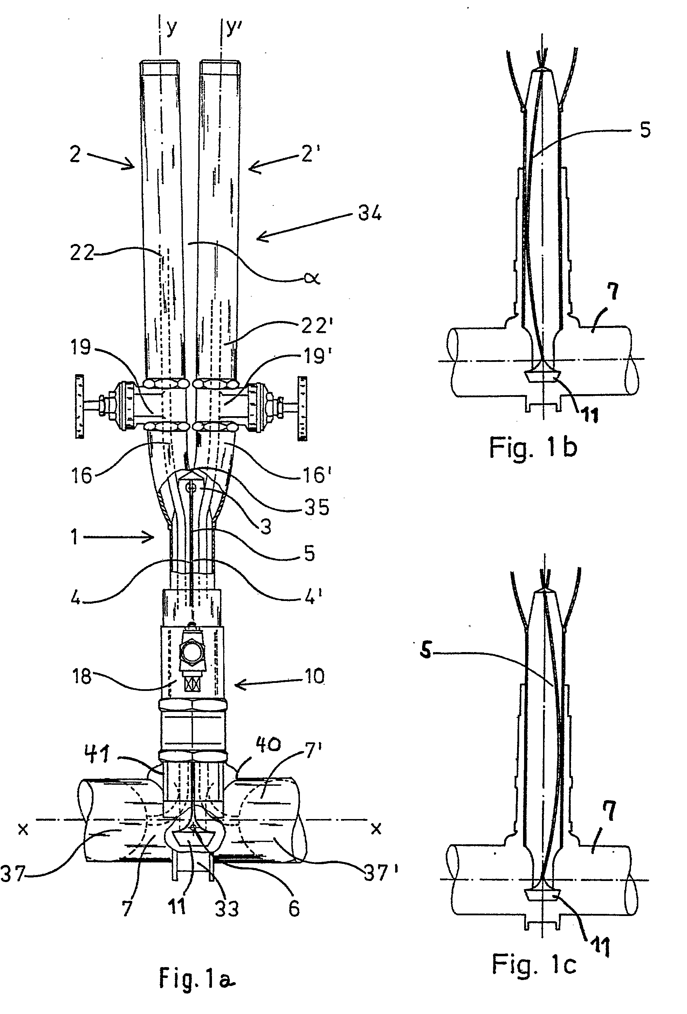

Figur 1 a eine auf eine Gasleitung mittels einer Schleusenanordnung aufgesetzte Vorrichtung, in Seitenansicht, mit der Trennwand in Mittelstellung;

Figur 1 b die Vorrichtung gemäß Figur 1 a mit der Trennwand in linker Stellung;

Figur 1 c die Vorrichtung gemäß Figur 1 a mit der Trennwand in rechter Stellung;

Figur 2 eine Teilansicht der Vorrichtung aus einer gegenüber Figur 1 um 90° versetzten Betrachtungsebene;

Figur 3 ein Führungsrohr in Ansicht;

Figuren 4 a, 4 b eine Zugstange in Seitenansicht und in Frontansicht;

Figuren 5 a, 5 b ein Hosenrohr in Seitenansicht und Frontansicht;

Figuren 6 a, 6 b eine Trennwand in erster Ausführungsform in Seitenansicht und in Frontansicht;

Figuren 7 a, 7 b eine Trennwand in zweiter Ausführungsform;

Figuren 8 a, 8 b eine Schleusenanordnung in Seitenansicht und Frontansicht, teilweise im Schnitt.

Die Figuren 1 a bis c zeigen eine Vorrichtung 34 zum provisorischen Absperren einer Gasleitung 7. Auf die Gasleitung 7 ist eine Schleusenanordnung 10 aufgesetzt, wobei durch ein bekanntes Sicherheits-Schleusenbohrgerät (nicht dargestellt) eine mit der Schleusenanordnung 10 verschließbare Montagebohrung 40 in der Gasleitung 7 hergestellt wurde. Die Schleusenanordnung 10 ist mit Aufspannmitteln 33 unter Zwischenlage einer elastischen Dichtung gasdicht und mechanisch fest auf die Gasleitung 7 aufgesetzt. Die Vorrichtung 34, d. h. das komplette Blasensetzgerät, ist mit der Schleusenanordnung 10 gasdicht verbunden.

Der untere Teil weist ein Verschlußrohr 18 auf, in das ein Einführkopf 41 eingesetzt ist. Auf das Verschlußrohr 18 ist abgedichtet ein Hosenrohr 1 ein- bzw. aufgesetzt, das sich in zwei Führungsrohre 2, 2' verzweigt. Unterhalb des Verzweigungsbereiches 3 weist der untere Teil 1' des Hosenrohres und der sich daran anschließende Teil des Verschlußrohres 18 im wesentlichen die gleiche innere, lichte Weite auf. Als Anhaltspunkt sei beispielsweise genannt: lichte Weite der Führungsrohre 2, 2': 40 mm; lichte Weite des Hosenrohres/Verschlußrohres: 50 mm.

Vom Verzweigungsbereich 3 bis hinunter zum Einführkopf ist eine Trennwand 5 vorgesehen, die einen erfindungswesentlichen Teil bildet. Die Trennwand 5 liegt gemäß Figur 1a genau in der Mitte, so daß die lichte Weite von Hosenrohr/Verschlußrohr genau in zwei Hälften geteilt ist. Die sich auf den beiden Seiten der Trennwand 5 befindenden Führungsflächen 4, 4' sind so belegt oder so poliert, daß an ihnen die zusammengefaltete Blase leicht entlanggleiten kann. Ähnliches gilt für die übrigen Wände der lichten Weite. Die Achsen y bzw. y' der beiden Führungsrohre bilden mit der Achse x - x des Gasleitungsrohres eine Ebene, zu der die Führungsflächen 4, 4' der Trennwand 5 quer stehen, d. h. ziemlich exakt einen Winkel von 90° einnehmen.

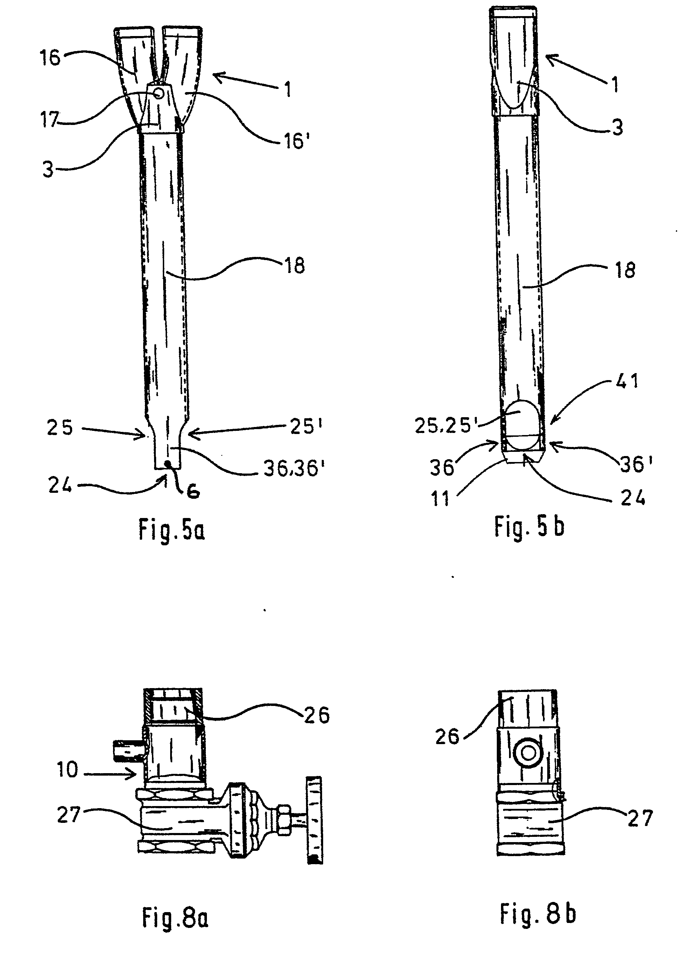

Im unteren Teil des Einführkopfes 41, dessen genaue Gestaltung aus den Figuren 5 a und 5 b hervorgeht, ist ein Umlenkstück 11 fest eingesetzt. Das Umlenkstück 11 wiederum besitzt eine erste Gelenkanordnung 13, an die sich ein bewegliches Zwischenglied 12 mit einem weiteren Gelenk 14 anschließt. Das Zwischenglied und die beiden Gelenke 13, 14 ermöglichen es, daß die aus biegsamem Metall bestehende Trennwand 5 einmal nach links und einmal nach rechts schlägt, wenn von der einen oder anderen Seite die Blase anstößt. Diese beiden Stellungen sind in den Figuren 1 b und 1 c dargestellt. Dabei ist die Trennwand 5 etwas schmaler als der Durchmesser der lichten Weite unterhalb des Verzweigungsbereiches 3, so daß die Trennwand 5 ihre Trennfunktion noch ausreichend erfüllen kann, ohne genau in der Mitte verharren zu müssen. Das Verschlußrohr 18 bzw. die lichte Weite ist demnach in zwei Kammern geteilt, die je nach Stellung der Trennwand 5 vergrößert oder verkleinert werden können.

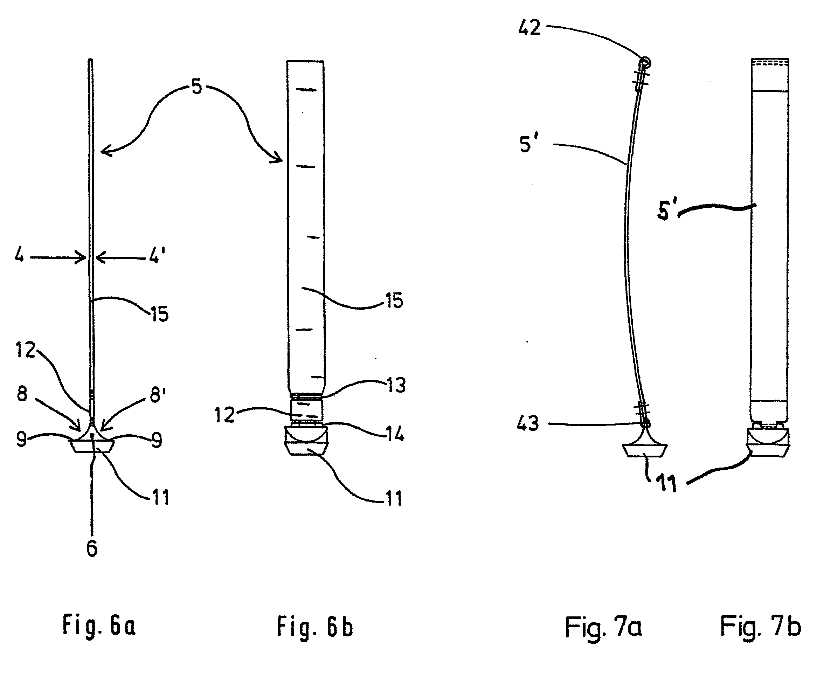

Wie aus den Figuren 6 a und 6 b im Detail ersichtlich, ist die Trennwand 5 in erster Ausführungsform als flache, metallische Zunge 15 mit glatter Oberfläche gebildet. Dabei ist möglich, das obere Ende dieser "Zunge" in einen Gleitspalt einzuführen, der sich im Scheitel des Umlenkbereiches 3 befindet. Es ist jedoch auch möglich, dieses Ende einfach lose pendeln zu lassen. Durch die etwas beengteren Verhältnisse im Verzweigungsbereich ist der Ausschlag der Trennwand 5 im Verzweigungsbereich stärker begrenzt. Es wird dadurch ausgeschlossen, daß die Trennwand 5 dort soweit zur einen oder anderen Seite hinüber pendelt, daß ein Verschieben bei Einschieben der Blase nicht mehr gewährleistet ist.

Das Umlenkstück 11 besitzt zwei entgegengesetzt leitende Umlenkflächen 9, 9'. Da die Trennwand 5 über die Gelenkanordnung 12, 13, 14 immer fest mit dem Umlenkstück verbunden ist, wird die eingeschobene Blase immer genau auf die jeweilige Umlenkfläche 9 bzw. 9' geschoben, die für ihre Endlage maßgebend ist.

Figuren 7 a und 7 b zeigen eine andere Ausführungsform der Trennwand. Anstelle einer metallischen, nicht übermäßig flexiblen Metallzunge, kann auch ein entsprechend geformter Kunststoffriemen 5' verwendet werden, der an seinem unteren Ende bei 43 und an seinem oberen Ende bei 42 stationär aufgehängt ist, auf seiner übrigen Länge aber so gestaltet ist, daß er ausweichen oder ausbeulen kann bei Kontakt mit der zusammengedrückten Absperrblase. Seine nach rechts und links möglichen Extremstellungen sind aus den Figuren 7 a und 7 b ableitbar. Er benötigt dazu eine gewisse Überlänge, Breite und Flexibilität, die sich nach der Nennweite und nach der Länge zwischen Umlenkbereich und Einführungskopf richten.

Aus den Figuren 5 a und 5 b ist ersichtlich, daß der Verzweigungsbereich 3 des Hosenrohres 1 mit zwei mit geringer Krümmung gegeneinander verlaufenden Rohrzweigen 16, 16' ausgebildet ist, die über einen gemeinsamen Durchdringungsbereich 17 in ein von der Trennwand durchsetztes Verschlußrohr 18 einmünden. Das freie Ende 24 des Verschlußrohres 18 weist in einer zur Achse x-x der Gasleitung querstehenden Ebene sattelförmige Ausnehmungen 25, 25' auf. Die Ausnehmungen 25, 25' lassen seitliche Wandteile 36, 36' stehen, welche im Zusammenwirken mit dem gekrümmten Flächenteile 9, 9' aufweisenden Umlenkstück 11, das sich im eingebauten Zustand zwischen den Wandflächen 36, 36' befindet und dort befestigt ist, ein seitliches Ausweichen der zusammengefalteten Sperrblase aus der vorgesehenen Richtung in die Gasleitung verhindern. Die Wandflächenteile 36, 36' wirken somit als zusätzliche Führungshilfen bei der Einführung der Sperrblasen.

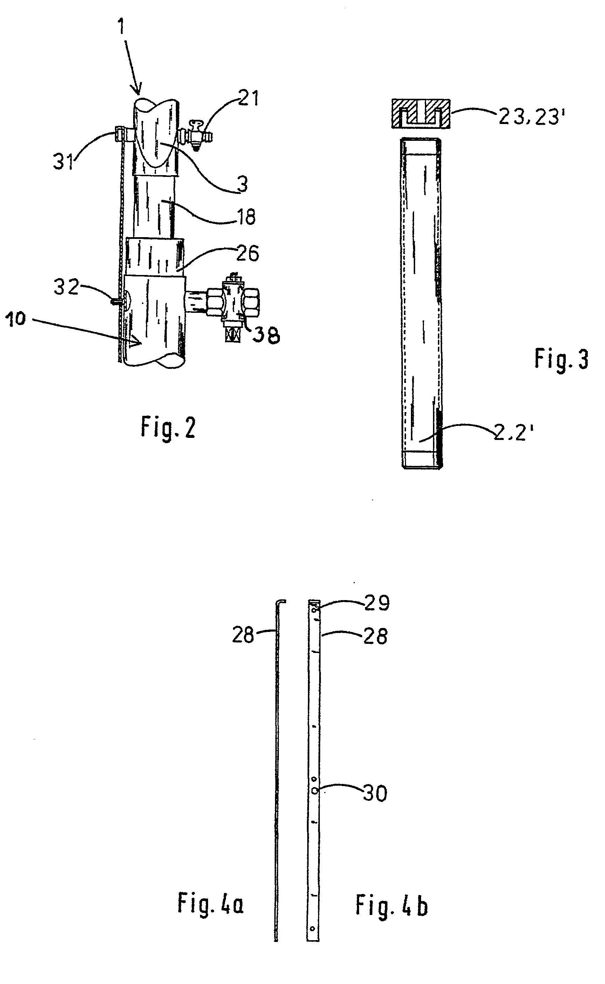

Wie aus der Zusammenschau der Figuren 1 und 2, sowie insbesondere der Figuren 8 a und 8 b ersichtlich, weist die Schleusenanordnung 10 eine das Verschlußrohr 18 axial einschiebbar aufnehmende, mit elastischen Dichtungselementen am Verschlußrohr 18 gasdicht abschließende Führungsbuchse 26 sowie einen Absperrschieber 27 auf. Ferner ist zur axialen Arretierung des Standrohres 18 in der Führungsbuchse 26 der Schleusenanordnung 10 eine Montagebohrung 29, 30 aufweisende Zugstange 28 angeordnet und mit einerseits am Hosenrohr 1 und andererseits als Aufsteckdorne ausgebildeten Befestigungselementen 31, 32 befestigt. Außerdem ist an die Schleusenanordnung 10 ein verschließbarer Stutzen 38 angebracht, über den eventuell auftretende Gasleckmengen gefahrlos abgeleitet werden können.

Weiter weisen die beiden Führungsrohre 2, 2' gemäß Figur 1 eine Anordnung auf, wobei diese im spitzen Winkel α gegeneinander zulaufen. Dieser Winkel α kann zwischen 2° und 5°, vorzugsweise ca. 3° betragen. Weiter ist zwischen dem Hosenrohr 1 und den Führungsrohren 2, 2' jeweils ein Absperrorgan 19, 19' angeordnet. Weiter sind die Führungsrohre 2, 2' (Fig. 3) zum Ansetzen einer eine Blasensetzstange 22, 22' (Fig. 1) abdichtend führenden Verschlußkappe 23 mit Außengewinde ausgebildet. Im Bereich des Hosenrohres 1 ist ein mit einem Abschlepporgan 21 verschließbarer Kontrollanschluß angeordnet, der auch zum Einführen von Inertgas vorgesehen ist.

Die Arbeitsweise des Gerätes, wie sie sich aus den dargestellten Ausführungsbeispielen ergibt, sei erläutert:

Nach Aufsetzen eines bekannten Sicherheits-Schleusenanbohrgerätes auf die Gasleitung 7 und Herstellung einer Montagebohrung 40 mit einem Durchmesser, der etwas größer ist als der Außendurchmesser des Verschlußrohres, wird nach Entfernen einer Bohrstange und deren Führung in der Schleusenanordnung 10 der Absperrschieber 27 in Verschlußstellung gebracht und damit die Montagestelle gegen Gasaustritt hermetisch gesichert.

Sodann wird die Vorrichtung 34 mit dem Verschlußrohr 18 in die Führungsbuchse 26 eingeführt und zunächst bis zum Absperrschieber 27 axial teleskopierend eingesetzt. Nachdem man sich überzeugt hat, daß die Absperrorgane 19, 19' der Vorrichtung 34 geschlossen sind, wird der Absperrschieber 27 geöffnet und das Verschlußrohr 18 so weit eingeschoben, daß dessen freies Ende 24 mit den Wandteilen 36, 36' unterhalb der Achse x-x der Gasleitung 7 in diese hineinragt. Durch Anbringen der Zugstange 28 mit den vorgegebenen Bohrungen 29, 30 durch Aufstecken auf die Befestigungselemente 31, 32 wird die Vorrichtung in der Schleusenanordnung 10 arretiert. In dieser Stellung befindet sich das gelenkig befestigte Ende der Trennwand 5 mit den entgegengesetzt gekrümmten Umlenkflächen 9, 9' des Umlenkstückes 11 in der in Figur 1 a gezeichneten Position unterhalb der Achse x-x der Gasleitung 7. Das obere Ende der Trennwand 5 wird entweder in einem Gleitspalt 42 verschieblich gehalten oder ist lose in den Verzweigungsbereich 3 eingeschoben.

Bei geschlossenen Absperrorganen 19, 19' wird sodann auf eines der Führungsrohre, beispielsweise auf das rechte Führungsrohr 2', eine Verschlußkappe 23' mit einer darin dichtend geführten Blasensetzstange (nicht dargestellt) aufgeschraubt. In den Raum des Führungsrohres 2' zwischen dem noch geschlossenen Absperrorgan 19' und der Kappe 23' befindet sich nunmehr das Ende einer Blasensetzstange mit einem Einführschlauch und am Ende einer zusammengefalteten Absperrblase 37'. Nunmehr wird das Absperrorgan 19' geöffnet und durch Herabstoßen der Blasensetzstange der Führungsschlauch und die Basis 37 vorgeschoben. Dabei wird die Trennwand 5 nach links gedrückt, so daß ein relativ großer Raum für die Blase zur Verfügung steht. Dieser Zustand ist in Figur 1 b dargestellt. Die Blase wird sodann in den rechten Teil 7' der Gasleitung 7 vorgeschoben, wobei sie entlang den Umlenkflächen gleitet und die gestrichelte Stellung erreicht. Ist die Blase 37' eingeschoben, wird sie aufgeblasen und bildet eine erste Absperrung der Gasleitung 7. Danach wird in ähnlicher Weise eine Blase 37 in den linken Teil der Gasleitung 7 eingeschoben. Die Trennwand 5 bewegt sich dann nach rechts und erlaubt es wiederum, den größeren Teil der lichten Weite auszunutzen. Dieser Zustand ist in Figur 1 a dargestellt. Die Blase 37 wird im linken Teil der Gasleitung positioniert. Nach dem Aufblasen befinden sich zwei Absperrblasen 37, 37' rechts und links vom Einführungskopf 1. Die zusammengefaltete Blase, beispielsweise bei einem Platzen, kann ohne weiteres wieder abgezogen werden. Zwischen den beiden Absperrblasen und den abdichtenden Verschlußkappen 23, 23' befindet sich ein abgeschlossener Raum, der über den Kontrollanschluß 21 überwacht werden kann.

**Patentansprüche**

1. Vorrichtung zum provisorischen Absperren einer Gasleitung, die über eine Montagebohrung zugänglich gemacht worden ist, unter Verwendung von aufblasbaren Absperrblasen, die durch die Vorrichtung und die Montagebohrung in Leitungslängsrichtung (Achse x - x) zusammengedrückt einschiebbar sind, mit einem auf die Montagebohrung aufsetzbaren Verschlußrohr (18) und einem in das Verschlußrohr (18) eingesetzten Einführkopf (41) mit einem Umlenkstück (11), **dadurch gekennzeichnet,**
   – daß auf das Verschlußrohr (18) ein sich in zwei Führungsrohre (2, 2') verzweigendes Rohr (1) aufgesetzt ist,
   – daß eine Trennwand (5) mit gegenüberliegend angeordneten Führungsflächen (4, 4') vorgesehen ist, die vom Verzweigungsbereich (3) des Rohres (1) bis zum Umlenkstück (11) reicht und die den unteren Teil (1') des Rohres (1) und das Verschlußrohr (18) in zwei für eine zusammengedrückte Absperrblase (37; 37') durchgängige Hälften teilt,
   – daß das Umlenkstück (11) zwei entgegengesetzt leitende, die Führungsflächen fortsetzende Umlenkflächen (9, 9') aufweist,
   – wobei die Achsen (y, y') der beiden Führungsrohre (2, 2') mit der Achse (x-x) des Gasleitungsrohres (7) eine Ebene aufspannen, zu der die Führungsflächen (4, 4') der Trennwand (5) quer stehen.

2. Vorrichtung nach Anspruch 1, dadurch gekennzeichnet, daß eine Trennwand (5) als längliche, flache, vorzugsweise biegsame Zunge ausgebildet ist, deren Breite kleiner ist als der Durchmesser der lichten Weite von Rohr (1) und Verschlußrohr (18) und die mit dem Umlenkstück (11) über eine Gelenkvorrichtung (12, 13, 14) verbunden ist.

3. Vorrichtung nach Anspruch 1, dadurch gekennzeichnet, daß die Trennwand (5) als biegsame Riemen (5') gestaltet ist, der an seinem oberen und unteren Ende gehalten ist und eine ein Ausweichen oder Ausbeulen bei Kontakt mit der zusammengedrückten Absperrblase erlaubende Breite, Flexibilität und Überlänge hat.

4. Vorrichtung nach Anspruch 1 oder 2, dadurch gekennzeichnet, daß die Trennwand (5) über ein bewegliches Zwischenglied (12) und zwei Gelenke (13, 14) mit dem Umlenkstück (11) verbunden ist.

5. Vorrichtung nach wenigstens einem der Ansprüche 1 bis 4, dadurch gekennzeichnet, daß der Verzweigungsbereich (3) des als Hosenrohr ausgebildeten Rohres (1) mit zwei mit geringer Krümmung gegeneinander verlaufenden Rohrzweigen (16, 16') ausgebildet ist, die über einen gemeinsamen Durchdringungsbereich (17) in das Verschlußrohr (18) einmünden.

6. Vorrichtung nach einem oder mehreren der Ansprüche 1 bis 5, dadurch gekennzeichnet, daß die beiden Führungsrohre (2, 2') im spitzen Winkel (α) zueinander verlaufend angeordnet sind, wobei der Winkel (α) zwischen 2 und 5°, vorzugsweise ca. 3° beträgt.

7. Vorrichtung nach einem oder mehreren der Ansprüche 1 bis 6, dadurch gekennzeichnet, daß zwischen dem unteren Teil (1') des Hosenrohres (1) und den Führungsrohren (2, 2') Absperrorgane (19, 19') angeordnet sind.

**Claims**

1. Device for temporarily closing a gas conduit which has been made accessible via an installation bore, using inflatable shutoff sacs which can be pushed in when collapsed in the longitudinal direction of the conduit (x–x axis) through the device and the installation bore, comprising a closing pipe (18), which can be placed over the installation bore, and an insertion head (41), which can be inserted in the closing pipe (18) and comprises a deflection part (11), characterised in
   that a pipe (1) which branches into two guide pipes (2, 2') is placed over the closing pipe (18),
   that a partition (5) with opposite guide surfaces (4, 4') is provided which extends from the branching area (3) of the pipe (1) to the deflection part (11) and divides the lower part (1') of the pipe 1) and the closing pipe (18) into two halves which are accessible to a collapsed shutoff sac (37; 37'),
   and that the deflection part (11) comprises two deflection surfaces (9, 9') which guide in opposite directions and represent continuations of the guide surfaces,
   with the axes (y, y') of the two guide pipes (2, 2') forming with the axis (x–x) of the gas conduit (7) a plane to which the guide surfaces (4, 4') of the partition (5) extend transversely.

2. Device according to claim 1, characterised in that a partition (5) is formed as an elongate, flat, preferably flexible tongue, the width of which is smaller than the inside diameter of the pipe (1) and the closing pipe (18) and which is connected to the deflection part (11) via a hinge device (12, 13, 14).

3. Device according to claim 1, characterised in that the partition (5) is formed as a flexible strap (5'), which is held at its upper and lower ends and has a width, flexibility and excess length which allow it to yield or bulge out upon contacting the collapsed shutoff sac.

4. Device according to claim 1 or 2, characterised in that the partition (5) is connected to the deflection part (11) via a mobile connecting member (12) and two hinges (13, 14).

5. Device according to at least one of claims 1 to 4, characterised in that the branching area (3) of the pipe (1), which is formed as a Y-pipe, is formed with two pipe ranches (16, 16') which extend with a slight curve towards one another and lead via a common penetration area (17) into the closing pipe (18).

6. Device according to one or more of claims 1 to 5, characterised in that the two guide pipes (2, 2') are arranged such that they extend towards one another at the acute angle (α), the angle (α) being between 2° and 5°, preferably approximately 3°.

7. Device according to one or more of claims 1 to 6, characterised in that shutoff members (19, 19') are arranged between the lower part (1') of the Y-pipe (1) and the guide pipes (2, 2').

**Revendictations**

1. Dispositif pour obturer provisoirement une conduite de gaz rendue accessible par un trou de montage, en utilisant des vessies obturatrices gonflables qui, par le dispositif et le trou de montage, peuvent être introduites, en condition resserrée, dans la direction longitudinale de la conduite (axe x–x), comportant un tube de fermeture (18) apte à être posé sur le trou de montage et une tête d'introduction (41) avec une pièce de déviation (11), introduite dans le tube de fermeture (18), caractérisé

   – par le fait qu'un tube (1) bifurquant en deux tubes de guidage (2, 2') est posé sur le tube de fermeture (18),

   – par le fait qu'il est prévu une cloison séparatrice (5) avec des surfaces de guidage (4, 4') agencées en opposition, laquelle s'étend de la région de bifurcation (3) du tube (1) jusqu'à la pièce de déviation (11) et partage la partie inférieure (1') du tube (1) et le tube de fermeture (18) en deux moitiés autorisant le passage d'une vessie obturatrice (37, 37') en condition resserrée,

   – par le fait que la pièce de déviation (11) présente deux surfaces de déviation (9, 9') fournissant des guidages opposés, prolongeant les surfaces de guidage,

   – les axes (y, y') des deux tubes de guidage (2, 2') fixant, avec l'axe (x–x) du tube (7) de la conduite de gaz, un plan par rapport auquel les surfaces de guidage (4, 4') de la cloison séparatrice (5) sont transversales.

2. Dispositif selon revendication 1, caractérisé par le fait qu'une cloison séparatrice (5) est conçue et réalisée en tant que langue oblongue, plate, de préférence flexible, dont la largeur est plus petite que le diamètre de la section intérieure libre du tube (1) et du tube de fermeture (18), et qui est liée à la pièce de déviation (11) par l'intermédiaire d'un dispositif d'articulation (12, 13, 14).

3. Dispositif selon la revendication 1, caractérisé par le fait que la cloison séparatrice (5) est réalisée en tant que courroie flexible (5') maintenue à son extrémité supérieure et à son extrémité inférieure et possédant un supplément de longueur, une flexibilité et une largeur permettant une esquive ou un cintrage lors du contact avec la vessie obturatrice resserrée.

4. Dispositif selon revendication 1 ou 2, caractérisé par le fait que la cloison séparatrice (5) est liée à la pièce de déviation (11) par un élément intermédiaire mobile (12) et par deux articulations (13, 14).

5. Dispositif selon au moins l'une des revendications 1 à 4, caractérisé par le fait que la zone de bifurcation (3) du tube (1) conçu en tant que tuyau-culotte est réalisée avec deux branches (16, 16') convergentes, ayant une faible courbure, lesquelles, par l'intermédiaire d'une zone de pénétration comune (17), débouchent dans le tube de fermeture (18).

6. Dispositif selon une ou plusieurs des revendications 1 à 5, caractérisé par le fait que les deux tubes de guidage (2, 2') convergent l'un vers l'autre selon un angle aigu (α), cet angle (α) valant entre 2° et 5°, de préférence environ 3°.

7. Dispositif selon une ou plusieurs des revendications 1 à 6, caractérisé par le fait que des organes d'arrêt (19, 19') sont agencés entre la partie inférieure (1') du tuyau-culotte (1) et les tubes de guidage (2, 2').

Fig. 1a

Fig. 1b

Fig. 1c

Fig. 2

Fig. 3

Fig. 4a

Fig. 4b

Fig. 5a

Fig. 5 b

Fig. 8a

Fig. 8 b

Fig. 6a

Fig. 6b

Fig. 7a

Fig. 7b